# EUROPEAN PATENT SPECIFICATION

(11) **EP 0 389 646 B1**
(45) Date of publication and mention of the grant of the patent: **03.03.1993**
(21) Application number: 89911402.9
(22) Date of filing: 12.10.1989
(51) Int. Cl.: B29C 45/57

(54) **PROCESS AND APPARATUS FOR INJECTION MOLDING**
VERFAHREN UND VORRICHTUNG ZUM SPRITZGIESSEN
PROCEDE ET APPAREIL DE MOULAGE PAR INJECTION

(30) Priority: 13.10.1988 JP 256011/88; 30.05.1989 JP 134576/89; 18.09.1989 JP 241467/89
(43) Date of publication of application: 03.10.1990
(73) Proprietor: SEIKI CORPORATION CO. LTD., Tokyo 105 (JP)
(72) Inventor: TSUTSUMI, Shigeru, Yonezawa-shi Yamagata 992-12 (JP)
(74) Representative: Harrison, Ivor Stanley
(86) International application number: PCT/JP89/01052
(87) International publication number: WO 90/03879

(56) References cited:
- EP-A- 0 204 133
- FR-A- 2 125 496
- FR-A- 2 620 646
- GB-A- 888 448
- GB-A- 2 116 903
- GB-A- 2 172 240
- US-A- 4 164 523
- US-A- 4 256 689
- US-A- 4 632 652
- US-A- 4 722 679

## Description

### TECHNICAL FIELD

The present invention relates to an improved process and apparatus for injection molding of plastic materials, particularly preferable in injection molding of precision products according to the preambles of claims 1 and 12.

### BACKGROUND ART

According to the prior art, an apparatus for injection molding of plastic material comprises an injection machine of a screw plunger type and a mold arrangement defining a mold cavity where a molded article is formed. The mold arrangement may be a single mold for a molded product or consist of a primary mold for a molded product and a cold runner mold for a runner. In place of the cold runner mold, the apparatus may be provided with a hot runner mold incorporated with a manifold between the single mold and the injection machine. An interruptible nozzle passage is formed between the mold arrangement and the body of the injection machine by a nozzle in the most simple, one cavity case or by a hot runner mold arrangement and the nozzle.

With such apparatus, a conventional injection molding process comprises steps of:
heating, plasticizing and metering a plastic material for a first article within the body of an injection machine having an injection plunger and communicating via a nozzle passage with a mold cavity having a gate defined in a mold arrangement;
injecting the metered material by means of the injection plunger through the nozzle passage towards the mold cavity;
exerting a first, external holding pressure on the injected material by means of the injection plunger so as to compact the injected material within the nozzle passage and the mold cavity;
interrupting the nozzle passage at a location remote from the gate using valve means, while said first holding pressure is being exerted, so as to form a closed space comprising the mold cavity and a portion of the nozzle passage between the cavity and the valve means;
upon said nozzle passage interruption, exerting a second holding pressure on the portion of the compacted material in said closed space; and
while the nozzle passage is interrupted, heating; plasticizing and metering further plastic material in the machine body for a subsequent article, and cooling the mold arrangement to freeze or solidify the compacted material in the mold cavity under said second holding pressure to provide the first article.

Processes of this type and apparatus for carrying them out are disclosed in EP-A-0204133, GB-A-2116903 and US-A-4632652.

For example, the particular steps of injection molding processes including the aforementioned steps are indicated in Tables I and II attached hereto.

Among the important factors influencing the quality of a molded product, it has been recognized that the material pressure-holding step is one of the most critical steps. If this step is not carried out in a suitable manner, the molded products have undesired shrinkages due to short shot and/or flashes due to over-packing.

The duration of the material pressure-holding step depends on the time needed for cooling a molded article in the mold cavity.

With a fixed mold cooling capability and a fixed volume of the mold cavity, a thinner molded article takes less time than a thicker molded article to freeze sufficiently for removal from the mold cavity. In this connection, the thicker molded article requires more time in the material pressure-holding step, although the injecting step and the plasticizing and metering step each take the same time as for the thinner molded article.

It has also been recognised in the prior art that, if the entire pressure-holding step is carried out using the injection machine, with the plunger exerting an external holding pressure on the injected material, subsequent to an injection pressure, in a combination of the mold cavity and the nozzle passage leading to the mold cavity, the plasticizing and metering step for the next shot cycle can be carried out only after the material pressure-holding step of the previous shot cycle is completed. This is because the injection plunger of the machine per se is essentially engaged in the material pressure-holding step.

There is, of course, a strong demand for a higher productivity of precision articles due to a shorter shot cycle time in the plastic injection molding industry.

The prior art referred to above includes the steps of interrupting the nozzle passage while the first holding pressure is being exerted by injection plunger of the machine and then exerting a second holding pressure by means of an auxiliary piston-cylinder unit while the nozzle is interrupted. This allows the material for a subsequent article to be plasticized and metered in the body of the machine whilst the material for the preceding article is solidifying in the mold.

The additional step of exerting a second molding pressure by means different from the plunger which exerts the first pressure has meant that the computers with which injection molding machines are usually provided to control the holding pressure and injection pressure have become more sophisticated or complicated with a higher cost incurred in computer equipment. At the present time, the following statement is by no means an exaggeration. The cost of the computer occupies a large part of the cost incurred in production of the injection machine with the result that recent machine production has become very expensive compared with the cost of the original simple injection machine used in the past, which was not equipped with a computer and ran by a simple operation involving "a non-stepped pressure and a non-stepped injection speed". This naturally leads to a higher cost incurred in producing molded articles.

In order to reduce production costs, various efforts to shorten the shot cycle time in other ways have, of course, been made in the industry. Such a shortened cycle time forces the time of the plasticizing and metering step to be shortened under the conventional circumstances. However, a serious problem is encountered in that shortening of the plasticizing and metering step requires an increase in the plasticizing rate or performance with an increased power supply, leading to an increased machine cost and operation cost.

Further, it should be noted that such an increased plasticizing capability of the injection machine causes the plastic material per se to be damaged by the screw plunger due to breakage of chains of a high resin polymer, while the polymeric material is being plasticized. This leads to deterioration of a molded article.

Still further, the increased plasticizing capability requires the material to be heated to a higher temperature. This leads to prolongation of the time required to cool the molded article in the mold, and thus the enhanced heating works against the attempt to shorten the shot cycle time. Due to this lower quality of the plasticized material and an enhanced heating, therefore, in combination, there is a certain limit to,the increase in the plasticizing capability, even if the increased cost incurred in production of such a higher performance injection machine is neglected.

Under the circumstances, the inventor recognizes that the improvement or development of the process and apparatus for injection molding of a plastic material in the conventional art is reaching or has reached the limit.

### DISCLOSURE OF THE INVENTION

An object of the present invention is to provide an improved process and apparatus for injection molding which does not require the use of a computer and, in comparison with the prior art, affords:
a shot cycle time which is considerably shortened with a fixed plasticizing capability of the injection machine; and
a plasticizing capability of the machine which is considerably reduced with a fixed shot cycle time, while a high quality of precision molded articles as a result of no "short shot" leading to shrinkage and no "over-pack" leading to flashes, is ensured.

A further object of the present invention is to provide a process and apparatus for injection molding of precision molded articles which is improved in that a precise adjustment of the material pressure-holding can be made manually without using any computer.

A still further object of the present invention is to provide a less expensive, simple small scale and/or lower plasticizing powered injection machine having a smaller plasticizing screw plunger irrespective of usage of a computer, incorporated with a mold arrangement of a relatively large scale subjected to a relatively large mold clamping power but enabling production of precision molded products with a high productivity and high quality.

According to the present invention, a process of injection molding is provided including the steps mentioned above but characterised in that the closed space formed upon said nozzle passage interruption by the valve means is of fixed volume and the second holding pressure is an internal pressure exerted by that portion of the compacted material itself in said fixed closed space, the second holding pressure being automatically and continuously decreased as the compacted material in the mold cavity contracts during cooling.

The invention also provides apparatus for performing this process, as defined in Claim 12 below.

The invention thus defines a new direction in injection molding technology completely different from the aforementioned conventional one.

According to the present invention, the conventional steps of plasticizing, metering and injecting are carried out by a conventional single-barrel-type or double-barrel-type injection machine, and the first material pressure-holding step is carried out conventionally by the same injection machine.

In the present invention, the first holding pressure is a stepped or non-stepped external static pressure exerted by the injection plunger moving axially as the injected material, as a whole, contracts while the mold arrangement is being cooled but the second holding pressure is a non-stepped internal static pressure exerted by the forward material portion compacted in the fixed closed space formed by the mold cavity and the forward part of the nozzle passage delimited by the valve means.

Herein, the term "external pressure" indicates a pressure exerted on the plastics material by external means, that is, the injection plunger, while the term "internal pressure" indicates a pressure exerted on the material by itself. The injection plunger exerting the external pressure is movable linearly against the material contained in a space closed thereby and changeable in volume due to its movement, while the material exerting the internal pressure is contained in a fixed closed space, that is, a closed space of fixed volume. In this connection, the external pressure is constant irrespective of changes in the material's temperature by heating or cooling, while the internal pressure varies as the temperature changes.

Preferably, the closed space packed with the forward injected material portion is designed to have a volume substantially the same as that of the mold cavity.

The valve means are incorporated in the nozzle passage, midway therealong, to interrupt communication between the interior of the machine body and the mold cavity and to allow the second holding pressure to be exerted on the forward injected material portion separated by the nozzle passage interruption.

According to the present invention, the injection molding process further comprises a step of sucking back the hot material remaining in the forward passage part by an expansion of the volume thereof, before the mold arrangement is opened for removing the molded article but while said nozzle passage interruption is maintained, to release the hot material from the excessive packing. The nozzle passage is rendered expansible by its being formed by a forward cylinder part and a bored-piston rear part provided with the valve means and movable in the cylinder part.

A forward end of the hot material remaining in the nozzle passage following removal of the molded article is frozen by cooling the mold. The frozen or cold forward material end is melted by instantaneous heat being temporarily applied after the sucking back step is completed but just before a next shot.

The instantaneous heating is preferably effected by a means invented by the inventor in the past, i.e., a so called "Spear System". The sucking back process or means is particularly necessary in a case where the shot cycle time is short and thus the mold cooling time is short.This is because the cold material end is not frozen enough to resist the internal pressure in the forward nozzle part with the result, if the sucking back is not effected to reduce the pressure, that the material is likely to leak out with the insufficiently frozen material end.

The nozzle passage interruption is released to have the mold cavity communicate with the interior of the machine body for the next shot, before the cold forward material end melts. In a stationary state, the hot plasticized material injected in an immediately preceding shot cycle, other than a resultant molded article, remaining in the injection machine including the entire nozzle passage is injected towards the mold cavity, together with a following fresh metered plasticized material, through the entire nozzle passage upon melting of the cold forward material end following the release from said nozzle passage interruption. The amount of the fresh metered material is substantially equivalent to that of the molded article.

With the valve means incorporated in the nozzle passage, the forward nozzle passage part defined in the fixed closed space of the invention is a forward part separated due to the nozzle passage interruption. The first, external pressure exerted by the injection plunger at the end of the first material pressure-holding step is substantially equivalent to the internal pressure exerted by said compacted material at the beginning of the second material internal pressure-holding step.

The nozzle passage may form a hot runner mold incorporated with a manifold having a sprue inlet to which the nozzle is attached. The mold arrangement may be such as to form a primary mold for providing a molded product and a cold runner mold for providing a molded runner, the molded product and the molded runner in combination forming said molded article in the mold cavity.

The inventor has called the above mentioned forward nozzle passage part of fixed volume incorporating the valve means a "material pressure-holding chamber" and has called the process and apparatus of the present invention an "injection molding system incorporating a material pressure-holding chamber", for convenience in identifying the invention using this new approach different from the conventional one.

According to the present invention, the duration of said second material pressure-holding step comprises a predominant part of the overall duration of the material pressure-holding steps. Preferably, the nozzle passage interruption is effected upon said injection. A dynamic injection pressure exerted on the material during high speed flow towards the mold cavity through the entire nozzle passage is stepped down from a high level to a lower level to change into a static holding pressure but the static holding pressure is interrupted from being exerted on the entire injected material upon the nozzle passage interruption effected immediately after completion of the injection.

The first holding pressure and the injection pressure are preferably non-stepped pressures but they may, of course, be multi-stepped pressures as needed.

According to the present invention, upon the nozzle passage interruption, the plasticizing and metering step is carried out by the injection machine for the next shot or injection. In this connection, the plasticizing and metering step can be carried out at a relatively low rate at the longest over a relatively long period of time substantially equivalent to that from the time just after a first injection to the time when the mold arrangement is closed for a second injection, the time of said longest step being almost equivalent to the shot cycle time from the first injection to the second injection.

This is one advantageous feature of the present invention and enables the duration of the plasticizing and metering step to be prolonged, for example, from 3.5 sec. to 8.5 sec. in a fixed shot cycle time of 14.59, as shown in Table I, with the effect that the injection machine can be designed to operate at a lower plasticizing rate, for example at about 2/5 (3.5/8.5) that of the conventional machine, a much smaller machine which consumes less power can be employed, and also the L/D ratio of the screw plunger can be larger. Further, with an injection machine having a fixed plasticizing rate, the shot cycle time is considerably decreased, for example to about 65% (9.59/14.59) of the conventional one as indicated in Table I.

Another important advantage of the present invention attained by using the internal holding pressure as the second material pressure-holding step is that, with the selection of an appropriate initial internal pressure, the molded article is obtained with no local shrinkage and flashes, without using any control of the holding pressure.

Generally speaking, this means that a computer is no longer needed for controlling the holding pressure since the second,step takes up a predominant part of the overall time of the material pressure-holding steps. Moreover, a computer is no longer needed for controlling the holding pressure in the first step because the time of the first step is very short; in other words, the present invention does not rely substantially on the injection machine for carrying out the material pressure-holding steps.

Further embodiments of the invention are contained in the dependent claims.

### BRIEF DESCRIPTION OF DRAWINGS

Figures 1 and 2 show an injection molding apparatus according to the present invention;
Figure 3 shows a flow or process chart and the valve means of Figure 1 in combination, indicating the time series of injection molding processes in a shot cycle, and
Figure 4 is a qualitative diagram showing the holding pressure exerted in the material pressure-holding steps carried out by the apparatus of the present invention.

### BEST MODE FOR CARRYING OUT THE INVENTION

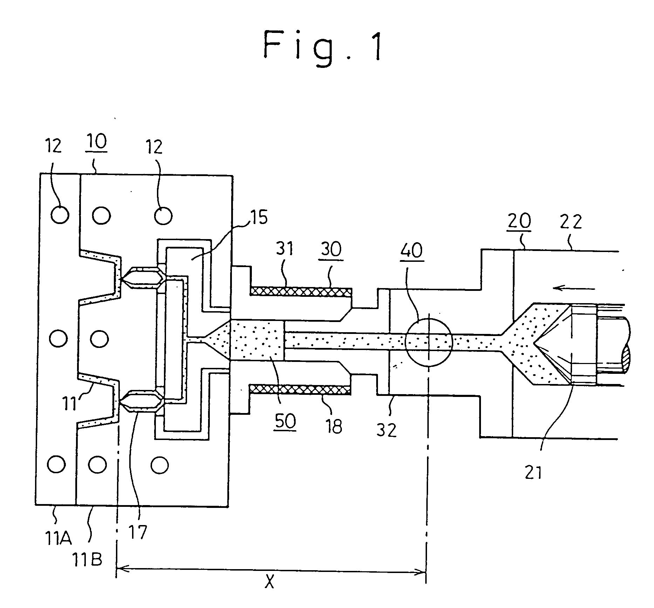

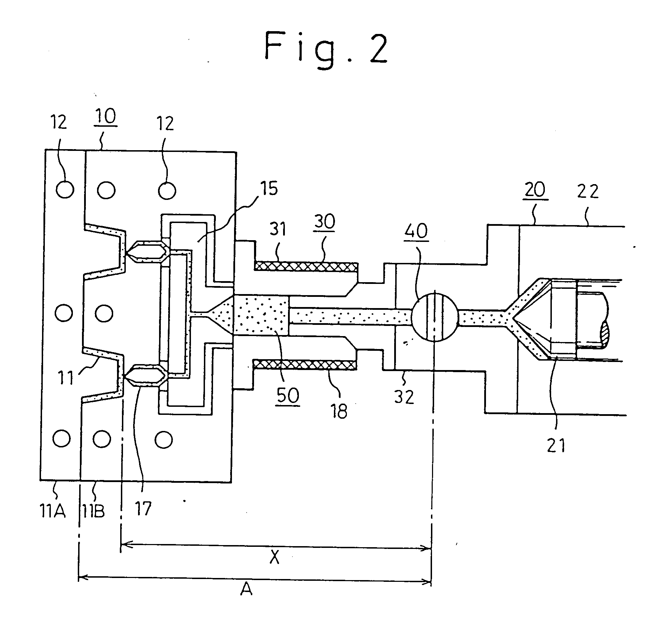

Figures 1 and 2 show an embodiment of an injection molding apparatus according to the present invention.

The apparatus for injection molding is incorporated with a mold apparatus 10 having mold halves 11A, 11B defining at least one cavity 11 having a gate, and comprises an injection machine 20 having a conventional single barrel-type body of a piston-cylinder provided with an injection plunger 21 therein and a hollow extension 30 therefrom including a nozzle and forming a nozzle passage 50 communicating between the interior of the machine body 22 and the mold cavity 11. The machine enables a plastic material to be plasticized and metered within the machine body 22 while the machine body 22 is being heated, the hot plasticized material to be injected into the mold cavity 11 through the nozzle passage 50, and the injected material at least partially to be held within the entire mold cavity 11 under pressure. The mold halves 11A, 11B are provided with means 12 for cooling the mold arrangement 10.

According to the present invention, valve means 40 are provided in the nozzle passage 50 for interrupting the nozzle passage 50 at an intermediate point therealong so as to break the communication between the interior of the machine body 22 and the mold cavity 11 and to form a fixed closed space X from a combination of the mold cavity 11 and a predetermined forward part of the nozzle passage 50 communicating therewith, in which a predetermined portion A of the injected material separated due to the nozzle passage interruption is compacted so that the compacted material A exerts an internal pressure to urge itself against the mold cavity 11.

Regarding Figures 1 and 2, the molding apparatus 20 of the present invention is a conventional single barrel type injection machine of a screw plunger type and is incorporated with a conventional mold arrangement 10 defining a mold cavity 11. A conventional hot runner mold 15 incorporated with a manifold, a bored block 31 and a bored subblock 32 in combination form a nozzle arrangement which defines the nozzle passage 50 communicating with the interior of a machine body 22 and the mold cavity 11. The main block 31 forms a cylinder which is coaxial with the injection machine 20 and the subblock 32 forms a bored piston nozzle which is movable coaxially within the cylinder of the main block 31 with a fixed forward stroke and is integral with the machine body 22. The cylinder is provided with a band heater 18 and defines a forward portion of the nozzle passage while the piston defines a rear portion of the nozzle passage. The subblock 32 is provided with the valve 40 for interrupting the nozzle passage and hence communication between the mold cavity 11 and the interior of the machine body 22.

The combination of the main block 31 and the subblock 32 allows the volume of the nozzle passage 50 to be expanded axially by a rearward movement of the injection machine 20 while the nozzle passage interruption is maintained but before a molded article is removed from the mold cavity 11, with the effect that a forward portion of the injected material, but not a molded article, remaining in the forward nozzle passage part is sucked back so that it is released from being pressurized and compacted.

The runner mold 15 is provided with means 17, a so called "Spear System", for instantaneously heating the runner mold at a free forward end of the runner passage when the mold arrangement 10 is closed for an injection operation, while the mold arrangement 10 is being cooled.

The runner mold 15 may be provided with other means, such as heating cartridges, for heating the runner mold to thereby keep a portion of the injected material remaining in both the runner passage and a sprue hot while a free end portion of the runner is being frozen with the molded article within the mold cavity by the mold cooling means. The latter may include means forming a gas nozzle in an inner cavity surface of each mold half for spraying gas onto the facing cavity surface of the other mold half to effect additional cooling of the mold arrangement at the cavity surfaces.

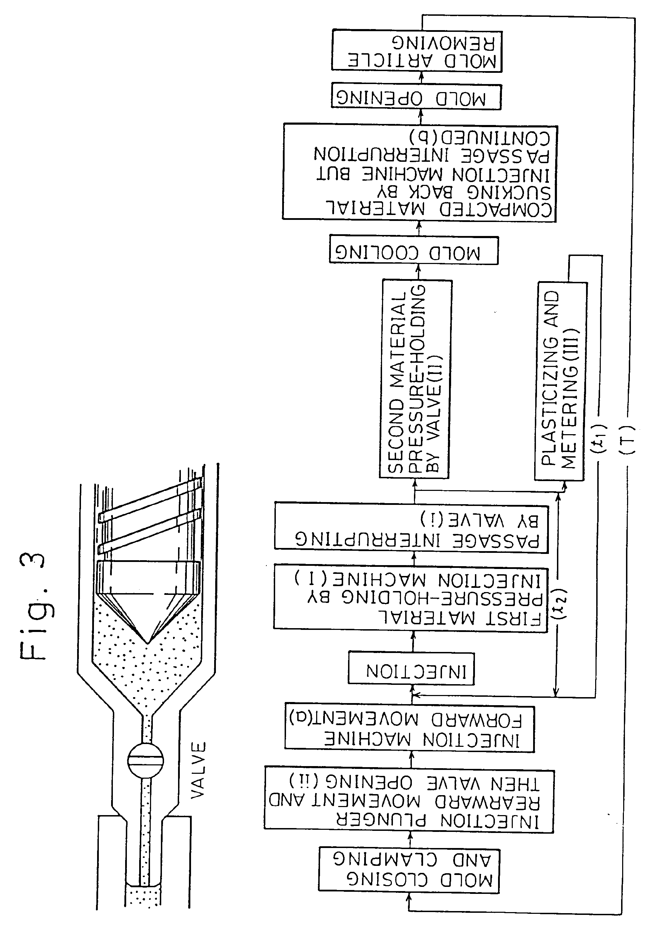

The apparatus with the mold arrangement 10 incorporating the hot runner mold 15 is operated as shown in Figure 3. According to the present invention, the material pressure-holding steps are carried out firstly by the injection machine 20 exerting a first, non-stepped, external pressure on the injected material (I) and then, upon the nozzle passage interruption (i) by the valve 40, by the compacted material A exerting a second, non-stepped or stepped internal pressure (II). Upon the nozzle passage interruption (i), the plasticizing and metering step (III) is carried out for a next shot cycle.

Referring to Figure 3, the nozzle passage interruption (i) is released, that is, the nozzle passage 50 is opened (ii), after the mold is closed and clamped but just after the injection plunger 21 is retracted, with a rear portion of the injected material separated due to the nozzle passage interruption and fresh metered plasticized material, in combination, being sucked back into the machine body 22. The nozzle passage interruption (i) is effected just after the first external material pressure-holding step (I) subsequent to the injection, and is continued until the time just before the mold arrangement 10 is opened for removal of a cold molded article.

The plasticizing and metering step (III) which is commenced upon the nozzle passage interruption (i) can be continued at the longest until the nozzle passage interruption is released, that is, the nozzle passage is opened (ii) for a next shot cycle. The plasticizing and metering operation can thus be continued at the longest by a time $\text{(t₁ = T-t₂)}$ in a shot cycle time (T), where t₂ is a relatively short time from the time when the injection is commenced to the time when the nozzle passage interruption (i) is effected and includes a substantially shorter time of the first pressure-holding step (I) by the injection plunger (21), following the injection.

Tables I and II below show operational steps of injection molding carried out in a shot cycle, each using a conventional injection apparatus and an injection apparatus of the invention (Figures 1 and 2). These apparatuses have the same mold arrangement as that for producing plastic VHS half cases (four cases and two cases per unit), respectively.

The conventional apparatus involved in Table II has a nozzle shut-off valve for preventing the material from leaking out of the nozzle, while the apparatus of the present invention is not provided with such a nozzle shut-off valve. Such leaking is prevented due to a combination of the material frozen at the forward end of the nozzle passage by the mold cooling and the material being sucked back. The other conventional apparatus involved in Table I has no shut-off valve.

Referring to Tables I and II, the plasticizing and metering steps (III) according to the present invention for a next shot cycle are carried out for about 8.5 sec. (Table I) and about 11 sec. (Table II), respectively, while the conventional plasticizing and metering steps are carried out for about 3.5 sec. (Table I) and about 4.5 sec. in shot cycle times of 14.59 sec. (Table 1) and 13.50 sec. (Table II), respectively.

Resultant molded products have a high quality without flashes and shrinkage.

The above results of the present invention are surprising in comparison with those of the prior art. This is a very advantageous effect of the present invention based on a new idea of a "material pressure-holding chamber molding system", where an internal pressure of a plasticized material is utilized for the internal pressure-holding step upon the nozzle passage interruption, and the plasticizing and metering step is commenced upon the nozzle passage interruption.

The injection machine is smaller in size and/or lower powered, and operates at a very reduced plasticizing rate, compared with the conventional injection machine. The effect is obtained without any computer control.

The injection machine of the present invention does not have a computer for controlling a first external holding pressure and is operated with a first, non-stepped external holding pressure for a very short time and, upon the nozzle passage interruption, the second pressure-holding step is carried out to have the compacted material exert a second, non-stepped or multi-stepped internal pressure without using a computer.

As shown in Tables I and II, the conventional injection machine exerts a multi-stepped external pressure for the entire material pressure-holding step using a computer (two-stepped pressure in Table I and three-stepped pressure in Table II).

With the apparatus of the invention, the so-called "material pressure-holding chamber" (X) is formed by the nozzle passage 50, including the valve 40, defined between the gate of the mold arrangement 10 and the point where the nozzle passage interruption (i) is effected, denoted by X. The volume of the forward part of the nozzle passage 50 defined by the valve 40 when the nozzle passage is interrupted is preferably the same as that of the mold cavity 11.

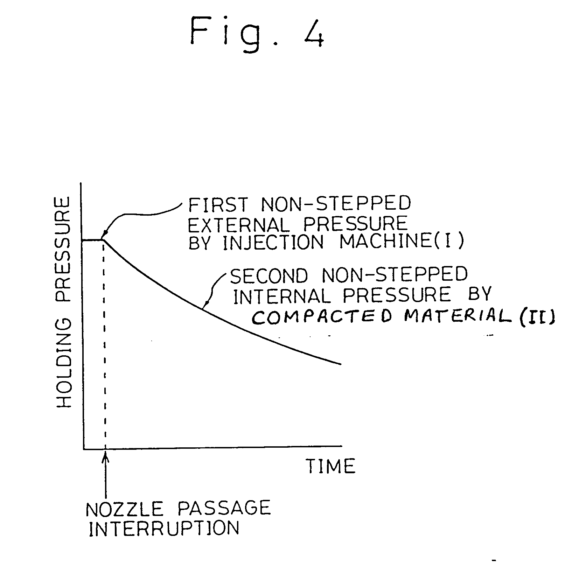

As shown in Figure 4, in the first material pressure-holding step (I), the first, external holding pressure is exerted by the injection plunger 21 in a non-stepped manner which does not require a computer and, in the second material pressure-holding step (II) the second, internal holding pressure exerted by the compacted material decreases from the first, external pressure in a non-stepped manner, again requiring no computer, as the mold arrangement is cooled.

The valve 40 of Figure 1 may preferably be modified to exhibit substantially the same function as that of a conventional nozzle opening adjusting valve with which a degree of opening of the nozzle passage at a certain position is adjusted for regulating an injection flow condition.

However, it should be noted that the above valve means 40 of the present invention cannot be modified to exhibit substantially the same function as that of a conventional nozzle shut-off valve or a conventional needle valve nozzle for preventing the material remaining in the nozzle passage from leaking out of the nozzle when the nozzle is removed from the mold arrangement or when a molded article is removed from the mold cavity. This is because the function of the valve means 40 exhibited upon the nozzle passage interruption, for carrying out the second pressure-holding step comprising the predominant part of the overall duration of the material pressure-holding steps, is in contradiction to the inherent function of the nozzle shut-off valve which is exhibited upon substantial completion of the entire material pressure-holding step.

To sum up, with respect to the effect on the contour quality of a molded article attained by the material pressure-holding, the internal pressure system of the present invention, a so-called "material pressure-holding chamber system", is substantially equivalent or superior to a conventional external pressure system involving a sophisticated computer control. This is highlighted by the fact that the material pressure-holding chamber system inherently requires no computer control. Further, the present invention attains a surprising effect that molding productivity can be considerably increased within a limit due to the mold cooling capability in spite of the fact that the injection machine performance is allowed to be considerably lower with the effect that the material quality of a plasticized material is enhanced and the machine cost and the operation cost are both considerably reduced, compared with the prior art.

Further, the above surprising effects of the present invention are enhanced as the thickness of a molded article is increased, since the thicker article requires a longer duration of the material pressure-holding steps.

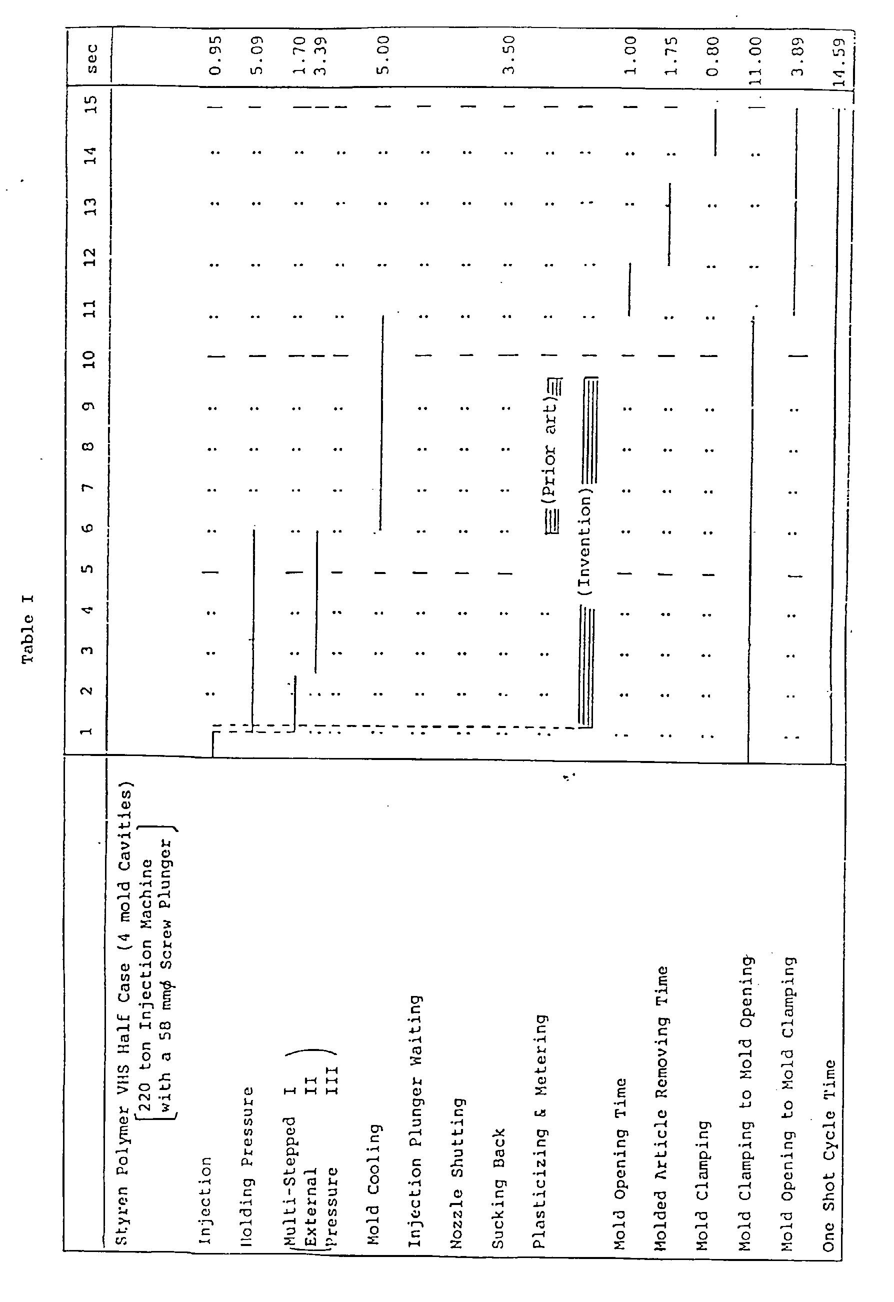

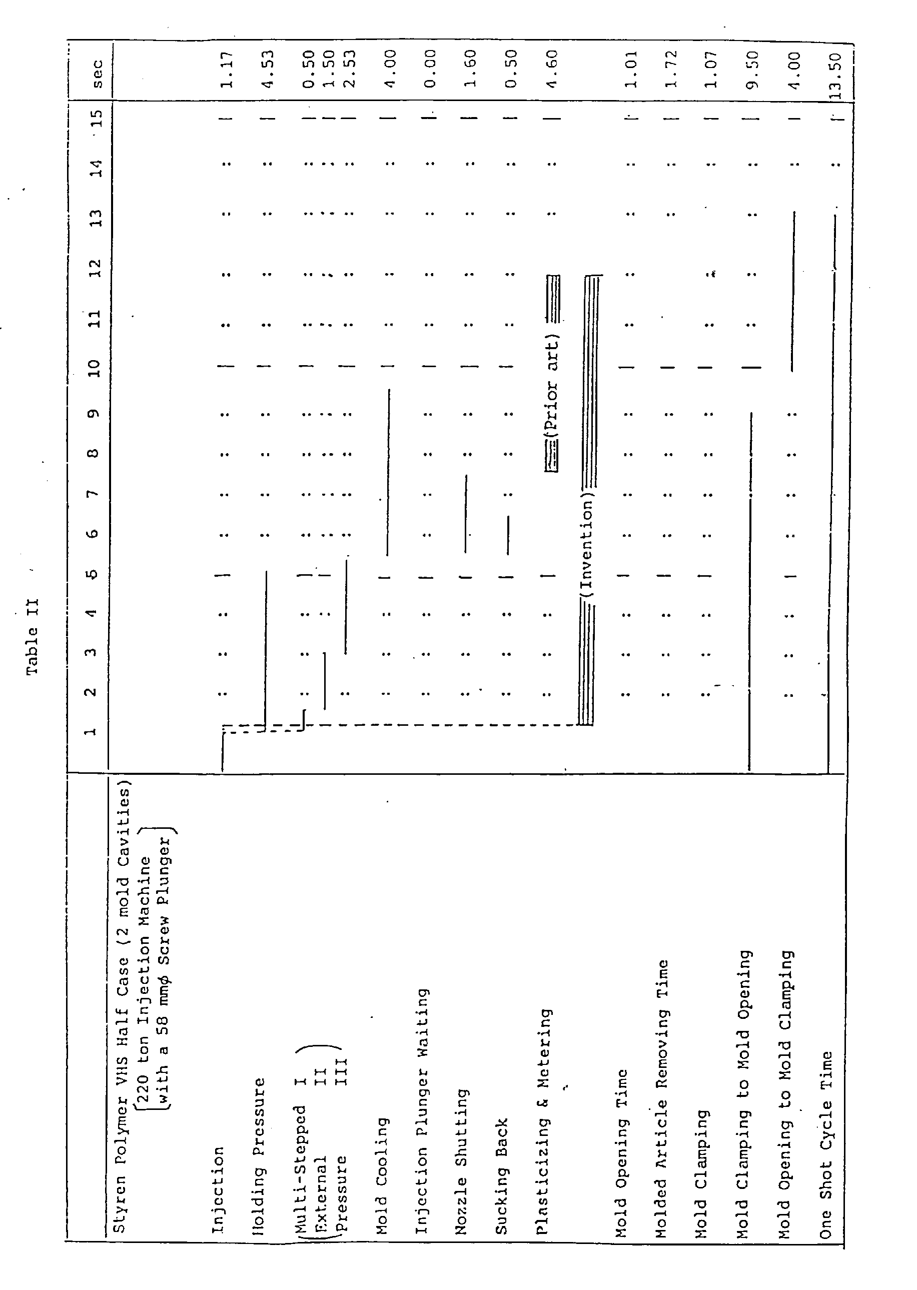

## Claims

1. A process for injection molding an article, comprising the steps of:
heating, plasticizing and metering a plastic material for a first article within a body (22) of an injection machine (20) having an injection plunger (21) and communicating via a nozzle passage (50) with a mold cavity (11) having a gate defined in a mold arrangement (10);
injecting the metered material by means of the injection plunger (21) through the nozzle passage (50) towards the mold cavity (11);
exerting a first, external holding pressure on the injected material by means of the injection plunger (21) so as to compact the injected material within the nozzle passage (50) and the mold cavity (11);
interrupting the nozzle passage at a location remote from the gate using valve means (40), while said first holding pressure is being exerted, so as to form a closed space comprising the mold cavity (11) and a portion of the nozzle passage (50) between the cavity and the valve means (40);
upon said nozzle passage interruption, exerting a second holding pressure on the portion of the compacted material in said closed space; and
while the nozzle passage (50) is interrupted, heating, plasticizing and metering further plastic material in the machine body (22) for a subsequent article, and cooling the mold arrangement (10) to freeze or solidify compacted material in the mold cavity under said second holding pressure to provide the first article,
characterized in that the closed space formed upon said nozzle passage interruption by the valve means (40) is of fixed volume (X) and the second holding pressure is an internal pressure exerted by that portion of the compacted material itself in said fixed close space (X), the second holding pressure being automatically and continuously decreased as the compacted material in the mold cavity contracts during cooling.

2. A process according to Claim 1, characterized in that the internal holding pressure step is of longer duration than the external holding pressure step.

3. A process according to Claim 2, characterized in that the step of heating, plasticizing and metering the further material is of substantially the same duration as internal holding pressure step.

4. A process according to any one of Claims 1 to 3, characterized in that the cooling step is commenced upon said nozzle passage interruption.

5. A process according to any one of Claims 1 to 4, characterized in that the first, external pressure is a non-stepped pressure.

6. A process according to any one of Claims 1 to 4, characterized in that the first, external pressure is a stepped pressure.

7. A process according to any one of the preceding claims, wherein the forward part of the nozzle passage is formed by a hot runner mold (15).

8. A process according to Claim 7, characterized in that it further includes a step of sucking back hot material remaining in said hot runner mold (15) by mechanically expanding (31, 32) the volume of the closed space (X) before the mold arrangement (10) is opened to remove the molded article but while said nozzle passage interruption is maintained thereby to release the hot material from compaction.

9. A process according to Claim 8, characterized in that a local portion of the hot material at the gate is frozen by the cooling of the mold arrangement (10), and in that said frozen local portion is melted by heat temporarily applied after said sucking back step is completed but just before a further injection step.

10. A process according to Claim 9, characterized in that the nozzle passage interruption is released so that the mold cavity (11) communicates with the interior of the machine body (22) for the next injection before the frozen local portion melts.

11. A process according to Claim 10, characterized in that the hot plasticized material metered for the subsequent article is substantially equivalent to that of the molded article.

12. Apparatus for injection molding articles, comprising:
an injection machine (20) comprising a body (22) defining a cylinder for receiving a heated plastic material for forming a first article;
an injection plunger (21) arranged for axial movement within the cylinder;
a hollow extension (30) forming a nozzle passage (50) from the machine body (22);
a mold (10) defining a cavity (11) having a gate, the mold (10) being coupled with the injection machine (20) so as to communicate with the machine body (22) via the nozzle passage (50) so that axial movement of the injection plunger (21) injects the heated plastic material the body under pressure through the nozzle passage toward the mold cavity; and
a valve (40) arranged at a location remote from the gate for movement relative to the nozzle passage (50) to interrupt the communication between the body (22) and the mold cavity (11) and to form a closed space comprising a portion of the nozzle passage (50) adjacent the mold cavity and the mold cavity (11) so that the injection machine is available to commence a molding operation for a second article,
characterized in that the closed space formed upon closure of the valve (40) is defined by only said nozzle passage portion, the valve (40) and the mold cavity (11) so that it is of fixed volume (X), the valve (40) interrupting the nozzle passage (50) to cause a predetermined portion of the injected material to be compacted in said fixed closed space (X) so that the said portion of the compacted material exerts an internal holding pressure to urge itself against the mold.

13. Apparatus according to Claim 12, characterized in that it further comprises a hot runner mold (15) arranged downstream of the valve (40) and forming a portion of the nozzle passage (50).

14. Apparatus according to Claim 12 or Claim 13, characterized in that it includes a heater (17; 18) for instantaneously heating a part of the material at the gate of the mold.

15. Apparatus according to Claim 12, Claim 13 or Claim 14, characterized in that the volume of said portion of the nozzle passage (50) defined by the valve (40) when the nozzle passage is interrupted is substantially the same as that of the mold cavity (11).

## Patentansprüche

1. Verfahren zum Spritzgießen eines Artikels, das die Schritte des:
Erwärmens, Plastizierens und Dosierens eines Kunststoffs für einen ersten Artikel innerhalb eines Körpers (22) einer Spritzmaschine (20) mit einem Spritzkolben (21), wobei die Spritzmaschine über einen Düsendurchlaß (50) mit einem Form-Hohlraum (11) in Verbindung steht, der einen in einer Form-Anordnung (10) definierten Steg hat;
Einspritzens des dosierten Materials mittels des Spritzkolbens (21) durch den Düsendurchlaß (50) hindurch in Richtung des Form-Hohlraums (11);
Ausübens eines ersten, externen Haltedrucks auf das eingespritzte Material mittels des Spritzkolbens (21), um das eingespritzte Material innerhalb des Düsendurchlasses (50) und des Form-Hohlraums (11) zu verdichten;
Unterbrechens des Düsendurchlasses an einer Stelle, welche vom Steg entfernt liegt, unter Verwendung einer Ventileinrichtung (40), während der erste Haltedruck gerade ausgeübt wird, so daß ein geschlossener Raum gebildet wird, der einen Form-Hohlraum (11) und einen Abschnitt des Düsendurchlasses (50) zwischen dem Hohlraum und der Ventileinrichtung (40) einschließt;
Ausübens eines zweiten Haltedrucks auf den Abschnitt des verdichteten Materials in dem geschlossenen Raum bei der Düsendurchlaßunterbrechung und
Erwärmens, Plastizierens und Dosierens von weiterem Kunststoff im Maschinenkörper (22) für einen Folgeartikel, während der Düsendurchlaß (50) unterbrochen ist, und Kühlens der Form-Anordnung (10) zur Erstarrung oder Verfestigung von verdichtetem Material im Form-Hohlraum unter dem zweiten Haltedruck, um den ersten Artikel zu schaffen, umfaßt,
**dadurch gekennzeichnet,** daß der geschlossene Raum, welcher bei Düsendurchlaßunterbrechung durch die Ventileinrichtung (40) gebildet wird, ein festes Volumen (X) hat und daß der zweite Haltedruck ein interner Druck ist, der von dem Abschnitt des verdichteten Materials ausgeübt wird, der sich in dem feststehenden, geschlossenen Raum (X) befindet, wobei der zweite Haltedruck automatisch und fortlaufend abnimmt, während das verdichtete Material sich im Form-Hohlraum im Verlauf des Kühlens zusammenzieht.

2. Verfahren nach Anspruch 1, dadurch gekennzeichnet, daß der Schritt des internen Haltedrucks länger dauert als der Schritt des externen Haltedrucks.

3. Verfahren nach Anspruch 2, dadurch gekennzeichnet, daß der Schritt des Erwärmens, Plastizierens und Dosierens des weiteren Materials im wesentlichen genauso lange dauert wie der Schritt des internen Haltedrucks.

4. Verfahren nach einem der Ansprüche 1 bis 3, dadurch gekennzeichnet, daß mit dem Schritt des Kühlens bei Düsendurchlaßunterbrechung begonnen wird.

5. Verfahren nach einem der Ansprüche 1 bis 4, dadurch gekennzeichnet, daß der erste, externe Druck ein nicht abgestufter Druck ist.

6. Verfahren nach einem der Ansprüche 1 bis 4, dadurch gekennzeichnet, daß der erste, externe Druck ein abgestufter Druck ist.

7. Verfahren nach einem der vorangegangenen Ansprüche, dadurch gekennzeichnet, daß der vordere Teil des Düsendurchlasses von einer heißen Angußform (15) gebildet wird.

8. Verfahren nach Anspruch 7, dadurch gekennzeichnet, daß es des weiteren einen Schritt des Rücksaugens von heißem Material, das in der heißen Angußform (15) verbleibt, einschließt durch mechanische Ausdehnung (31, 32) des Volumens des geschlossenen Raums (X), ehe die Form-Anordnung (10) geöffnet wird, um den Formling zu entfernen, aber während die Düsendurchlaßunterbrechung aufrechterhalten wird, um dadurch das heiße Material aus der Verdichtung zu lösen.

9. Verfahren nach Anspruch 8, dadurch gekennzeichnet, daß ein örtlicher Abschnitt des heißen Materials am Steg durch das Kühlen der Form-Anordnung (10) erstarren gelassen wird und daß der erstarrte örtliche Abschnitt durch zeitweilig aufgebrachte Wärme geschmolzen wird, nachdem der Rücksaugschritt beendet ist, aber gerade, ehe ein weiterer Einspritzschritt beginnt.

10. Verfahren nach Anspruch 9, dadurch gekennzeichnet, daß die Düsendurchlaßunterbrechung aufgehoben wird, so daß der Form-Hohlraum (11) mit dem Inneren des Maschinenkörpers (22) für die nächste Einspritzung in Verbindung steht, ehe der erstarrte örtliche Abschnitt schmilzt.

11. Verfahren nach Anspruch 10, dadurch gekennzeichnet, daß das heiße plastizierte Material, das für den Folgeartikel dosiert wird, im wesentlichen dem des Formlings gleichwertig ist.

12. Vorrichtung zum Spritzgießen von Artikeln, wobei die Vorrichtung aus:
einer Spritzmaschine (20) mit einem Körper (22), der einen Zylinder zum Aufnehmen eines erwärmten Kunststoffes zur Formung eines ersten Artikels begrenzt;
einem Spritzkolben (21), der zum Zwecke einer Axialbewegung innerhalb des Zylinders angeordnet ist;
einer hohlen Erweiterung (30), welche einen vom Maschinenkörper (22) ausgehenden Düsendurchlaß (50) bildet;
einer Form (10), die einen Hohlraum (11) mit einem Steg begrenzt, wobei die Form (10) mit der Spritzmaschine (20) kraftschlüssig verbunden ist, damit sie über den Düsendurchlaß (50) mit dem Maschinenkörper (22) in Verbindung steht, so daß durch die Axialbewegung des Spritzkolbens (21) der erwärmte Kunststoff unter Druck ab dem Körper durch den Düsendurchlaß hindurch in Richtung des Form-Hohlraums eingespritzt wird, und
einem Ventil (40) besteht, das an einer vom Steg entfernt liegenden Stelle zum Zwecke einer Bewegung relativ zum Düsendurchlaß (50) angeordnet ist, um die Verbindung zwischen dem Körper (22) und dem Form-Hohlraum (11) zu unterbrechen und um einen geschlossenen Raum zu bilden, welcher einen Abschnitt des Düsendurchlasses (50) neben dem Form-Hohlraum und den Form-Hohlraum (11) umfaßt, so daß die Spritzmaschine zum Starten eines Formvorgangs für einen zweiten Artikel zur Verfügung steht,
**dadurch gekennzeichnet,** daß der beim Schließen des Ventils (40) gebildete, geschlossene Raum nur durch den Düsendurchlaßabschnitt, das Ventil (40) und den Form-Hohlraum (11) begrenzt wird, so daß er ein festes Volumen (X) hat, wobei das Ventil (40) den Düsendurchlaß (50) unterbricht, um ein Verdichten eines vorbestimmten Abschnitts des eingespritzten Materials in dem feststehenden, geschlossenen Raum (X) zu bewirken, so daß dieser Abschnitt des verdichteten Materials einen internen Haltedruck ausübt, um sich gegen die Form zu drängen.

13. Vorrichtung nach Anspruch 12, dadurch gekennzeichnet, daß sie des weiteren eine heiße Angußform (15) aufweist, die stromabwärts vom Ventil (40) angeordnet ist und einen Abschnitt des Düsendurchlasses (50) bildet.

14. Vorrichtung nach Anspruch 12 oder Anspruch 13, dadurch gekennzeichnet, daß sie eine Heizeinrichtung (17; 18) zum momentanen Erwärmen eines Teils des Materials am Steg der Form einschließt.

15. Vorrichtung nach Anspruch 12, Anspruch 13 oder Anspruch 14, dadurch gekennzeichnet, daß das Volumen des Abschnitts des Düsendurchlasses (50), der von dem Ventil (40) begrenzt wird, wenn der Düsendurchlaß unterbrochen ist, im wesentlichen gleich dem des Form-Hohlraums (11) ist.

## Revendications

1. Procédé de moulage par injection d'un article comprenant les étapes suivantes:
le chauffage, la plastification et le dosage d'une matière plastique pour un premier article à l'intérieur du corps (22) d'une machine à injection (20) comportant un piston d'injection (21) et communiquant par un passage d'ajutage (50) avec une cavité de moulage (11) comportant une ouverture délimitée dans un dispositif à moule (10) ;
l'injection du matériau dosé au moyen du piston à injection (21) par le passage d'ajutage (50) en direction de la cavité du moule (11) ;
l'application d'une première pression externe de maintien sur le matériau injecté au moyen du piston d'injection (21) afin de compacter le matériau injecté à l'intérieur du passage d'ajutage (50) et de la cavité du moule (11) ;
l'interruption du passage d'ajutage en un endroit éloigné de l'ouverture par l'utilisation de moyens formant vanne (40), pendant que ladite première pression de maintien est appliquée, afin de créer un espace clos comprenant la cavité du moule (11) et une partie du passage d'ajutage (50) entre la cavité et les moyens formant vanne (40) ;
au moment de ladite interruption du passage d'ajutage, l'application d'une seconde pression de maintien sur la portion de matériau compacté se trouvant dans ledit espace clos ; et
pendant que le passage d'ajutage (50) est interrompu, le chauffage, la plastification et le dosage de la matière plastique suivante à l'intérieur du corps de la machine (22) pour un article suivant, et le refroidissement du dispositif à moule (10) pour geler ou solidifier le matériau compacté à l'intérieur de la cavité du moule sous ladite seconde pression de maintien pour former le premier article,
caractérisé en ce que l'espace clos formé après ladite interruption du passage d'ajutage par les moyens formant vanne (40), a un volume fixe (X) et en ce que la seconde pression de maintien est une pression interne exercée par la portion du matériau compacté elle-même à l'intérieur dudit espace clos fixe (X), la seconde pression de maintien étant automatiquement et continuement réduite au fur et à mesure de la contraction du matériau compacté à l'intérieur de la cavité du moule pendant le refroidissement.

2. Procédé selon la revendication 1, caractérisé en ce que l'étape de maintien d'une pression interne dure plus longtemps que l'étape de maintien d'une pression externe.

3. Procédé selon la revendication 2, caractérisé en ce que l'étape de chauffage, de plastification et de dosage de la matière suivante a sensiblement la même durée que l'opération de maintien de la pression interne.

4. Procédé selon l'une quelconque des revendications 1 à 3, caractérisé en ce que l'étape de refroidissement commence dès ladite interruption du passage d'ajutage.

5. Procédé selon l'une quelconque des revendications 1 à 4, caractérisé en ce que la première pression extérieure est une pression non échelonnée.

6. Procédé selon l'une quelconque des revendications 1 à 4, caractérisé en ce que la première pression extérieure est une pression échelonnée.

7. Procédé selon l'une quelconque des revendications précédentes, dans lequel la partie avant du passage d'ajutage est constituée par un moule à canal chaud (15).

8. Procédé selon la revendication 7, caractérisé en ce qu'il comprend en outre une étape d'aspiration en arrière du matériau chaud restant dans ledit moule à canal chaud (15) par dilatation mécanique (31, 32) du volume de l'espace clos (X) avant que le dispositif à moule (10) soit ouvert pour dégager l'article moulé, mais pendant que ladite interruption du passage d'ajutage est maintenue afin de soustraire le matériau chaud au compactage.

9. Procédé selon la revendication 8, caractérisé en ce qu'une partie locale du matériau chaud se trouvant sur l'orifice est solidifiée par le refroidissement du dispositif à moule (10), et en ce que ladite partie locale solidifiée est fondue par la chaleur appliquée momentanément après que l'étape d'aspiration en arrière soit achevée mais immédiatement avant une étape suivante d'injection.

10. Procédé selon la revendication 9, caractérisé en ce que l'interruption du passage d'ajutage est supprimée de manière que la cavité de moulage (11) communique avec l'intérieur du corps de la machine (22) pour la prochaine injection avant que la partie locale solidifiée fonde.

11. Procédé selon la revendication 10, caractérisé en ce que le matériau plastifié chaud, dosé pour l'article suivant, est sensiblement équivalent à celui de l'article moulé.

12. Appareil de moulage par injection d'articles comprenant :
une machine d'injection (20) comprenant un corps (22) définissant un cylindre pour recevoir une matière plastique chauffée afin de former un premier article ;
un piston d'injection (21) agencé pour effectuer un mouvement axial à l'intérieur du cylindre ;
un prolongement creux (30) formant un passage d'ajutage (50) à la sortie du corps de la machine (22) ;
un moule (10) délimitant une cavité (11) qui comprend une ouverture, le moule (10) étant accouplé à la machine d'injection (20) de manière à communiquer avec le corps de la machine (22) par le passage d'ajutage (50) de manière qu'un mouvement axial du piston d'injection (21) injecte la matière plastique chauffée venant du corps sous pression en passant par le passage d'ajutage en direction de la cavité du moulage ; et
une vanne (40) placée en un endroit éloigné de l'ouverture pour subir un mouvement par rapport au passage d'ajutage (50) afin d'interrompre la communication entre le corps (22) et la cavité de moulage (11) et de former un espace clos comportant une partie du passage d'ajutage (50) adjacent à la cavité de moulage, et la cavité de moulage (11) afin que la machine d'injection soit disponible pour commencer l'opération de moulage d'un second article,
caractérisé en ce que l'espace clos formé au moment de la fermeture de la vanne (40) est défini seulement par ladite partie du passage d'ajutage, la vanne (40) et la cavité de moulage (11) pour avoir un volume fixe (X), la vanne (40) interrompant le passage d'ajutage (50) pour faire compacter une portion prédéterminée de matériau injecté dans ledit espace clos fixe (X) afin que ladite portion de matériau compactée exerce une pression interne de maintien qui force ledit matériau contre le moule.

13. Appareil selon la revendication 12, caractérisé en ce qu'il comprend en outre un moule à canal chaud (15) monté en aval de la vanne (40) et formant une partie du passage d'ajutage (50).

14. Appareil selon l'une des revendications 12 ou 13, caractérisé en ce qu'il comprend un chauffage (17 ; 18) pour chauffer instantanément une partie du matériau près de l'ouverture du moule.

15. Appareil selon l'une des revendications 12, 13 ou 14, caractérisé en ce que le volume de ladite partie du passage d'ajutage (50) défini par la vanne (40) quand le passage d'ajutage est interrompu est sensiblement le même que celui de la cavité de moulage (11).
